# EUROPÄISCHE PATENTSCHRIFT

(11) **EP 0 589 544 B1**
(45) Veröffentlichungstag und Bekanntmachung des Hinweises auf die Patenterteilung: **30.01.2002**
(21) Anmeldenummer: 93250185.1
(22) Anmeldetag: 22.06.1993
(51) Int. Cl.: H05B 7/144

(54) **Dreiphasige Lichtbogenofenanlage mit Drossel**
Three phase arc furnace arrangement with inductor
Installation de four à arc tri phasé avec inductance

(30) Priorität: 23.09.1992 DE 4232585
(43) Veröffentlichungstag der Anmeldung: 30.03.1994
(73) Patentinhaber: SMS Demag AG, 40237 Düsseldorf (DE)
(72) Erfinder: Schunk, Eckart, W-4000 Düsseldorf 1 (DE)
(74) Vertreter: Presting, Hans-Joachim, Dipl.-Ing.

(56) Entgegenhaltungen:
- EP-A- 0 429 774
- EP-A- 0 483 405
- FR-A- 1 569 102
- FR-A- 2 457 029
- SOVIET INVENTIONS ILLUSTRATED Week 8424, 15. September 1983 Derwent Publications Ltd., London, GB; AN 84-150145 & SU-A-1 042 211 (LVOV POLY)

## Beschreibung

Die Erfindung betrifft eine dreiphasige Lichtbogenofenanlage, insbesondere zur Stahlbehandlung, mit einer zwischen dem öffentlichen Netz und einem Ofentransformator in Reihe geschalteten Drossel, zu der parallel ein Überbrückungstrenner angeordnet ist und geht aus von EP-A-0 429 774.

Aus "Elektrowärme International", Nr. 37 (1979) B 315 bis B 319 ist es bekannt, Lichtbogenöfen mit einer in Reihe geschalteten Drossel auszurüsten. Ergänzend zu der Lichtofenanlage eigenen Impedanz werden Stabilisierungs-Drosselspulen unter Berücksichtigung der Drosselimpedanz eingesetzt, um den Lichtbogen zu stabilisieren oder den Kurzschlußstrom zu begrenzen.

Parallel zu der aus dieser Schrift bekannten Stabilisierungs-Drosselspule ist ein Überbrückungstrenner angeordnet mit den Schaltstufen Drossel eingeschaltet, also Überbrückungstrenner geöffnet, und Drossel ausgeschaltet, also Überbrückungstrenner geschlossen.

Aus DE-OS 35 08 323 ist eine Einrichtung zur Speisung elektrothermischer Öfen bekannt, bei der Thyristorsteller in Reihe mit einer Zwischenkreiswicklung eines Haupttransformators und der zugehörigen Primärwicklung eines Zusatztransformators vorgesehen ist. Der Thyristorsteller steht dabei über einen Steuerimpulsgeber mit einem durch einen Mikroprozessor geführten Regler in Verbindung.

Die Steuerung einer'Drossel, u.z. weder einer Stabilisierungsdrossel noch einer Begrenzungsdrossel, ist dieser Schrift zu entnehmen.

Aus der Schrift EP-A-0 429 774 ist eine dreiphasige Lichtbogenofenanlage mit in Reihe geschalteter Drossel, mit parallelem Überbrückungsschalter bekannt, wobei der Überbrückungsschalter auch als an Steuerungselemente angeschlossene Drehstrom-Thyristorbrücke ausgebildet ist, die Steuerungselemente mit Mess- und Regelelementen in Verbindung stehen, die einzeln oder in Kombination die Änderung des Stromes, der Spannung sowie den Flicker berücksichtigen.

Die Erfindung hat sich das Ziel gesetzt, eine dreiphasige Lichtbogenofenanlage zu schaffen, bei der äußerst schnell negative Rückwirkungen insbesondere auf schwache Netze vermieden werden und bei der die Situation der Aulage vorausschanend beurteilt und entsprechend gesteuert werden kann. Die Erfindung erreicht dieses Ziel durch die kennzeichnenden Merkmale des Anspruchs.

Die vorgesehene Thyristorbrücke ermöglicht es, extrem schnell die Drossel stufenlos zu schalten. Durch die nahezu ohne Zeitverzögerung durchgeführte Impedanzänderung der Lichtbogenofenanlage werden ungewünschte Rückwirkungen auf das Netz, insbesondere Netzspannungsschwankungen, weitgehendst vermieden.

Die Thyristorbrücke ist an Steuerungselemente angeschlossen, die nicht nur ein elektronisches Ein- und Ausschalten, sondern stufenlos ein dynamisches Steuern zulassen. Verschleißfrei wird dabei eine Unabhängigkeit von der Schalthäufigkeit erreicht.

Die Steuerungselemente stehen erfindungsgemäß mit einer Meß- und Regeleinrichtung in Verbindung. Hierdurch wird es möglich, der Energiezufuhr- sowie der Ofenanlage Meßdaten zu entnehmen und diese ggf. mit Grenz- sowie Solldaten zu verarbeiten und als Steuersignale den Steuerelementen zuzuleiten. Hierzu zählen Daten der Stromänderung, der Spannungsänderung, dem Oberwellengehalt, dem Flicker, Informationen des Ein- bzw. Mehrofenbetriebes sowie die Prozeßdaten, wie der Einsatz von Schrott oder von Eisenschwamm. Die genannten Daten können als einzelne Leitgröße oder auch als Kombination verschiedener Werte verwendet werden.

Beim Einsatz von Rechnern besteht dabei die Möglichkeit, nach Vergleich der aktuellen Istdaten mit Solldaten die Steuerelemente automatisch einzustellen oder Entscheidungen vorzubereiten und anzuzeigen, damit die Bedienungsmannschaft in den Prozeß eingreifen kann.

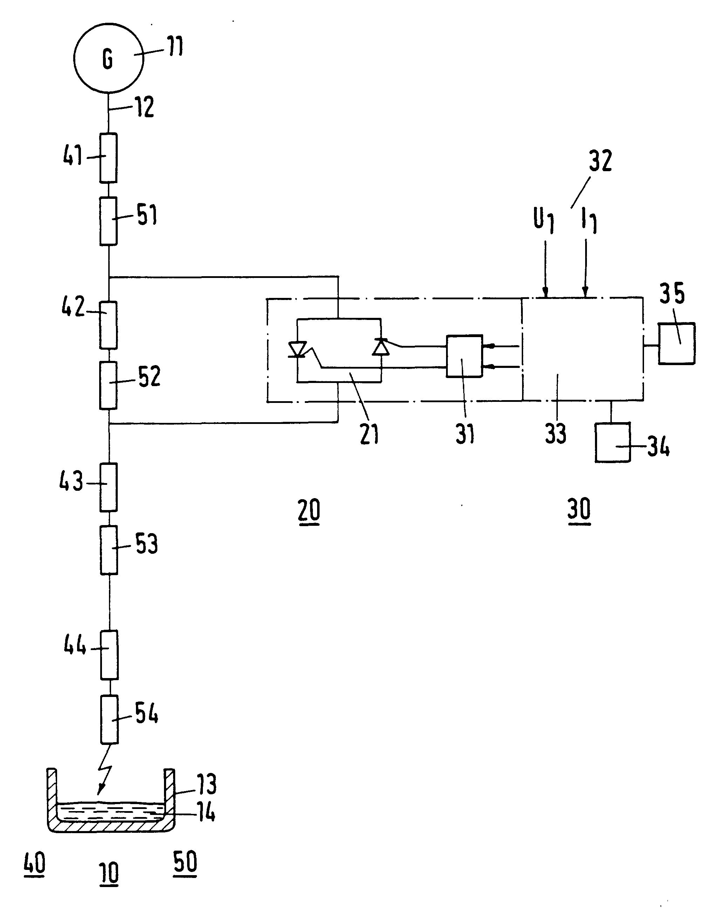

Ein Beispiel der Erfindung ist in der Fig. 1 aufgezeigt. Schematisch dargestellt ist die Stromeinrichtung 10 mit der Stromerzeugung 11 und der Stromleitung 12 (vereinfacht dargestellt ist noch das Ofengefäß 13 mit der Schmelze 14) mit der Gesamtinduktivität 40, aufgeteilt in die Induktion des Netzes 41, der Drossel 42, des Trafos 43 und des Ofens 44 sowie des Gesamtwiderstandes 50, aufgeteilt in Widerstand des Netzes 51, der Drossel 52, des Trafos 53 und des Ofens 54. Parallel zu der Drossel 42, 52 ist ein Überbrückungsschalter 20 in Form einer Thyristorbrücke 21 angeordnet.

Die Thyristorbrücke 21 steht mit Steuerungselementen 31 sowie Meßelemten 32 und Regelelementen 33 einer Meß- und Regeleinrichtung 30 in Verbindung.

Die Meß-und Regelemente (32,33) said an eine elektronische Datenverarbeitungsanlage (35) angeschlossen, mit der die gemessenen Ist-Daten und frei wählbare Soll-Daten auswertbar und den Steuerungselementen (31) vorgebbar sind.

### Positionsliste

- 10: Stromeinrichtung
- 11: Stromerzeugung
- 12: Stromleitung
- 13: Lichtbogenofen
- 14: Schmelze
- 20: Überbrückungsschalter
- 21: Thyristorbrücke
- 30: Meß- und Regeleinrichtung
- 31: Steuerungselemente
- 32: Meßelemente
- 33: Regelelemente
- 34: Anzeigegerät
- 35: EDV-Anlage
- 40: Gesamtinduktivität
- 41: "Netz"
- 42: "Drossel"
- 43: "Trafo"
- 44: "Ofen"
- 50: Gesamtwiderstand
- 51: "Netz"
- 52: "Drossel"
- 53: "Trafo"
- 54: "Ofen"

## Patentansprüche

1. Dreiphasige Lichtbogenofenanlage, insbesondere zur Stahlbehandlung, mit einer zwischen dem öffentlichen Netz (41, 51) und einem Ofentransformator (43, 53) in Reihe geschalteten Drossel (42, 52), zu der parallel ein Überbrückungsschalter (20) angeordnet ist, wobei der Überbrückungsschalter (20) eine an Steuerungselemente (31) angeschlossene Drehstrom-Thyristorbrücke (21) ist,
**dadurch gekennzeichnet,**
**daß** die Steuerungselemente (31) mit Meßelementen (32) sowie Regelelementen (33) in Verbindung stehen, die einzeln oder in Kombination die Änderung des Stroms, der Spannung, des Oberwellengehaltes sowie den Flicker berücksichtigen und Informationen des Ein- bzw. Mehrofenbetriebes sowie Prozeßdaten wie Einsatz von Schrott oder Eisenschwamm verarbeiten und daß die Meß- und Regelelemenete (32, 33) an eine elektronische Datenverarbeitungsanlage (35) angeschlossen sind, mit der gemessene Ist-Daten und frei wählbare Soll-Daten auswertbar und den Steuerungselementen (31) vorgebbar sind.

## Claims

1. Three-phase arc furnace installation, in particular for steel treatment, having an inductor (42, 52) connected in series between the electrical supply system (41, 51) and a furnace transformer (43, 53), a bypass switch (20) being arranged in parallel with said inductor (42, 52), the bypass switch (20) being a three-phase thyristor bridge (21) connected to open-loop control elements (31),
**characterised in that**
the open-loop control elements (31) are connected with measuring elements (32) and closed-loop control elements (33), which, individually or in combination, take account of variations in current, voltage, harmonic content and flicker and process information about single or multiple furnace operation together with process data, such as use of scrap or iron sponge and **in that** the measuring and closed-loop control elements (32, 33) are connected to an electronic data processing installation (35) with which measured actual data and freely selectable scheduled data may be evaluated and specified to the open-loop control elements (31).

## Revendications

1. Installation de four à arc électrique triphasé, en particulier pour le traitement d'acier, comportant un inducteur (42, 52) monté en série entre le réseau public (41, 51) et un transformateur de four (43, 53), par rapport auquel est agencé, en parallèle, un commutateur de pontage (20), le commutateur de pontage (20) étant un pont à thyristor à courant triphasé (21) raccordé à des éléments de commande (31),
**caractérisée en ce que** les éléments de commande (31) sont reliés à des éléments de mesure (32) ainsi qu'à des éléments de réglage (33), qui, individuellement ou en combinaison, prennent en compte la modification du courant, de la tension, de la teneur en harmoniques, ainsi que du papillotement et traitent des informations sur le fonctionnement du four unique ou multiple, ainsi que des données de procédé comme l'utilisation de ferrailles ou de fer spongieux, et **en ce que** les éléments de mesure et de réglage (32, 33) sont raccordés à une installation de traitement de données électronique (35), grâce à laquelle des données réelles mesurées et des données de consigne pouvant être librement choisies peuvent être exploitées et appliquées aux éléments de commande (31).
